# EUROPEAN PATENT APPLICATION

(11) **EP 1 973 353 A1**
(43) Date of publication of application: **24.09.2008**
(21) Application number: 07005616.3
(22) Date of filing: 19.03.2007
(51) Int. Cl.: H04Q 3/00

(54) **Providing telephony services for a SIP-client via a mobile service switching centre (MSC) of a circuit-switched network**

(71) Applicant: Nokia Siemens Networks GmbH & Co. KG, 81541 München (DE)
(72) Inventor: Zygan, Renate Dr., 81477 München (DE)

(57) **Abstract**

The method establishes connections from and to a secondary client (SIP-client) of a packet-switched network (SIP network) to and from a circuit-switched wireless telephony network. The secondary client (SIP-client) of the packet-switched network is identified by the same MSISDN number as a first, mobile client being subscribed to the circuit-switched wireless telephony network. In case of the secondary client calling, a IN (Intelligent Net) service (SIP-S) is used which provides the GSM services normally being executed by a VMSC (Visited MSC) for a roaming mobile phone. In case of a MSISDN number shared between a first, mobile client and a secondary SIP-client being called, after execution of all terminating GSM services, an IN (Intelligent Network) Service (SIP-S) is used to let both clients ring in parallel, and establish connection to that client which answers first.

## Description

The invention relates to a method for providing originating and terminating telephone services to a client of a packet-switched network.

A Session Initiation Protocol (SIP) is a packet-switched network protocol for creating, modifying and terminating a session with one or more participants. SIP-based voice networks comprise, according to the state of the art, an SIP-server "RegS", at which SIP-client terminals register with their current IP (Internet Protocol)-addresses. The RegS server also provides the identification and authorisation of the SIP-clients and the IP-address routing between two SIP-clients A and B. The SIP-based voice network further comprises application servers "AppS" that are included into the SIP-signalling if additional application functions are needed. SIP networks also need connections to circuit-switched TDM (Time Division Multiplex) networks to enable calls from the SIP network to a TDM network, e.g. a GSM (Global System for Mobile Communications). In many cases media gateway servers "MgS" for the transit to TDM (Time Domain Multiplex)-telephony network are part of the SIP-based network.

Standard solutions for a SIP-based voice network are described in the standards 3GPP TS 23.228 and TS 23.278. According to these standards, SIP-application servers are used to control the services for the SIP client together with the SIP-Registrar/Proxy and with an additional SIP client database. TDM nets are usually IN (Intelligent Networks) networks that provide telephony services like operator determined barring services or prepaid services.

For the transit from the SIP network to the IN (Intelligent Network) services of the TDM net, a special SIP-application server is standardized. This type of SIP voice networks requires a plurality of servers that need to be specially programmed.

It is an object of the invention to provide a method for providing originating and terminating telephony services to a client of a packed-based network, which can be provided by less complex servers. It is also object of the invention to provide a method for establishing a connection from a circuit-switched wireless telephony network to a client of a packed-based network by using less complex servers. It is further object of the invention to provide a respective mobile service switching centre and a communication system.

A method for providing originating telephony services to a secondary client of a packed-based network is provided, in which the secondary client of the packed-based network uses the same MSISDN (Mobile Subscriber ISDN) number as a primary mobile client being subscribed to the circuit-switched wireless telephony network. Originating services are the services that are provided to the calling party, the so-called A-side.

The method comprises a step of receiving, at a mobile service switching centre (MSC), a call from the secondary client via the packet-switched network. An IN-service "SIP-S" is triggered. IN stands for Intelligent Network and describes a network architecture, which enhances the call telephony services by the additional services like toll free calls and prepaid calls. "SIP-S" is a name being chosen for this service, any other name could be used for it. The IN-service "SIP-S" executes the services that are subscribed by the mobile client at the circuit-switched wireless telephony network. These services are for example operator determined barring services or the control of displaying the telephone number of the calling party and are normally provided by a Visited MSC (VMSC).

A mobile switching center (MSC) is an ISDN telephone switch with mobile-specific functions. An MSC connects calls between two or more user terminals. A Gateway MSC establishes a connection between the mobile network and another network like an analog PSTN, a second mobile network or a data network. The Visited MSC is the MSC that is connected to the base station subsystem in with a roaming mobile phone is currently located.

The IN-service "SIP-S" further checks if Originating CAMEL Subscription Information (O-CSI) services are subscribed by the mobile client. The IN service "SIP-S" marks the call if O-CSI services are subscribed.

This method provides a telephony connection from an SIP-based voice net, which is connected to circuit-switched wireless telephony network like the GSM-network. New IP-based voice services may be provided with this concept. For example, a GSM user will be provided with a SIP-client for his IP-terminal in addition to his SIM (Subscriber Identifier Module)-card for his GSM-terminal. The IP-terminal e.g. a desktop computer or a laptop. The SIP-client will be addressed by the same user telephone number MSISDN as the GSM-terminal.

If the MSISDN of user having such an SIP additional services is called, both the GSM-terminal and the SIP-client ring, of course only if the device is currently registered in the GSM respectively the SIP-net. The connection between the SIP-net and the GSM-net of the service provider may be toll free for the user. The user may use the access to the SIP-net of the service provider via the internet. This provides a worldwide availability and cheap calls using the internet with the SIP-client as in alternative to the GSM roaming.

By triggering the IN-service "SIP-S", the same services as the services of the GSM-net are provided for the calls that are made by the user from his SIP-client to the TDM-users.

The next steps are executed by one MSC or a plurality of MSC's. Within the packet-switched network the call from the secondary client just needs to be directed to the MSC such that the need for administrating the user specific services within the SIP-network does not exist any more. The information about the subscribed services is kept just in the Home Location Register (HLR) of the telephony network and does not need to be copied to the SIP-network. Accordingly, the architecture of the SIP-network becomes less complex.

According to an embodiment, the mobile switching centre (MSC) detects from a first prefix added to the dialled number of the call if the call comes from a client of the packet-switched network. If there is no prefix the call comes from the mobile telephone e.g. via base station subsystem or a UMTS radio access network (UTRAN). The use of prefixes is common in many MSC's, such that the triggering of the IN-service "SIP-S" may be implemented in the MSC just by reprogramming .

In a further embodiment the call is marked by a second prefix, if O-CSI services are subscribed. Such a prefix also can easily be detected by MSC, which then emulates the characteristics of the special O-CSI. The circuit-switched wireless telephony network is preferable a GSM or a UMTS network for which it is advantageous to provide the same services for a client using his SIP service by the described method, because the international roaming is expensive.

In an embodiment the message further comprises the steps of transferring the call from the secondary client to a media gateway server (MgS), if the secondary client calls an E.164 number. In a further step, the media gateway server put the first prefix (P1) at dialled number. These steps can be provided by the standard function of a SIP-application server and respectively of a media gateway server. These servers do not require special functions for the voice services in addition to the already available function needed for the data services.

If the IN-service "SIP-S" gets information about the subscribed services from the HLR, the user data does not need to be stored in additional register for the SIP service.

The invention also provides a method for providing terminating telephony services to a secondary client (SIP-client) of a packet-switched network (SIP network). The secondary client (SIP-client) of the packet-switched network is identified by the same MSISDN number as a mobile client being subscribed to the circuit-switched wireless telephony network. The method comprises the following steps which are executed by a gateway mobile switching centre (GMSC). First the call attempt is received from the circuit-switched wireless telephony network. The call may originally derive from a telephone of the wireline PSTN, but is routed to the GMSC, which is part of the circuit-switched wireline telephony network.

As a further step, the terminating telephony services, which are subscribed by the mobile client, are executed. These services are for example the service for a call redirection. The last service being subscribed by the circuit-switched wireless telephony network may be the assignment of a personal ring back tone. The GMSC receives the MSRN (Mobile Station Roaming Number), which enables to route to the mobile client.

As the next step the connection setup to the mobile client is continued. The call is routed to the mobile client, which starts to ring. In parallel, a IN-service "SIP-S" is executed, which initiates a connection to the secondary client.

The establishing of the connection to the secondary client is provided by the GMSC. This has the advantage that the requirements for the SIP-net are minimal. The packet-switched network does not need any specific functionality for the voice services besides the routing of the calls. For the circuit-switched wireless telephony network e.g. a GSM network, new functions are only needed in the GMSC and in the server for the new IN services in that the new IN-service "SIP-S" needs to be implemented. The TDM user data basis in the HLR can be reused. The new service specific functions may be introduced as software updates in existing GSM-net nodes. Accordingly, the method can be implemented with minimal costs.

If the "SIP-S" IN-service initiates the connection to the secondary client by adding a third prefix (P3) to the MSISDN number, the routing may easily be implemented, because this prefix function is already part of existing media gateway servers.

In an embodiment, the connection of the call is built up to the client that picks up first. The clients are the secondary client and the mobile client. The attempt to connect to the client, which does not pick up first, is cancelled. The user has the possibility to choose if he wants to use the mobile phone or the SIP-client, e.g. a laptop with a headset, to receive the call.

If the secondary client picks up first, the GMSC may send a "no-charge-indicator" to the charging server of the circuit-switched wireless telephony network. The user that receives the call may avoid expensive roaming calls by receiving the call by the secondary client.

To avoid the CAMEL standards restriction that only one T-CSI service can be triggered by the GMSC, the subscription of the IN-service "SIP-S" may be stored in the national supplemental GSM service subscription.

For the signalling between all concerned network nodes in the SIP-net and in the GSM-net only standardized messages are used. This allows the use of different suppliers and also results in cost reductions. In the first phase of SIP-based voice services it is expected that a high majority of the calls being initiated by SIP-clients are directed in the existing GSM-net. Accordingly, the proposed method, at which routing of all calls, which are initiated by the SIP-clients to any E.164 number is done via a media gateway server into the TDM-net, can be run profitably. This is also the case if the B-user currently uses only the SIP-client and a routing of the media gateway server is disadvantageous.

The routing of calls between two SIP-clients may be optimised by a SIP interface to the A-side functions of the SIP-S service in further embodiments.

The invention also relates to a mobile switching centre (MSC), which comprises a receiving unit for receiving a call attempt from a secondary client (SIP-client). This secondary client is subscribed to a packet-switched network that is identified by the same MSISDN number as a first, mobile client being subscribed to a circuit-switched wireless telephony network.

The MSC further comprises a first trigger unit which triggers an IN-service "SIP-S". The IN-service "SIP-S" executes the services subscribed by the mobile client in the circuit-switched wireless telephony network. The IN-service further checks if O-CSI (Originating CAMEL Subscription Information) services are subscribed. The IN-service may run on the MSC itself or at a separate SCP (Service Control Point). The MSC also comprises a second trigger unit that recognizes from the marking at the dialled number if O-CSI services are subscribed.

The triggering of the IN-services is performed by the MSC. Accordingly, no separate user data basis for the voice services is needed in the SIP network. The SIP client be authenticated in the SIP net. Of course, authentication data per user is needed therefor.

In an embodiment, the receiver unit detects by a first prefix (P1) added to the dialled number if the call attempt is initiated by a client of the packet-switched network.

If dialled number of a call attempt is marked by adding a second prefix (P2) the second trigger unit preferably triggers the O-CSI- based services of the calling party.

The invention also relates to a mobile service switching centre (MSC), comprising a receiver for receiving a call attempt from the circuit-switched wireless telephony network. The dialled MSISDN number of the call attempt identifies a secondary client (SIP-client) of the packet-switched network (SIP-net) and a first, mobile client of a circuit-switched wireless telephony network. The MSC further comprises an executing unit that executes the services subscribed by the mobile client. A trigger unit of the MSC triggers an IN service "SIP-S" which initiates a connection to the secondary client. A connection unit establishes a connection to the mobile client and in parallel a connection to the secondary client under the control of the IN service "SIP-S".

The MSC makes it possible to provide the call attempt to both clients and to provide all terminating services independently which client is used. The user data of the circuit-switched network is used without the need for an additional user data basis for the telephony services in the packet-switched network.

In an embodiment, the mobile switching centre routes the call to the secondary client by the help of a third prefix (P3) being added to the called MSISDN number.

The connection unit and the execution unit establish the connection to the client which picks up first and terminate the connection to the other client under the control of the IN service based on standardized CAMEL leg management procedures. These procedures are described in the CAMEL standards.

Preferably, the mobile switching centre (MSC) comprises the means both for the outgoing calls and the incoming calls. Accordingly, the SIP-S service has two parts, one for the incoming calls and one for the outgoing calls.

The IN service "SIP-S" may be executed on a separate SCP to reduce the load of the MSC.

The invention further provides a communication system with a above-described mobile switching centre and a Media Gateway Server as a connection between the mobile switching centre and a packet-switched network. The Media Gateway Server has a first means for adding a first prefix (P1) to the dialled number of the call from the secondary client and for routing the call to the mobile switching centre. The Media Gateway server has a second means for routing a call from the mobile switching centre to the packet-switched network.

If the second means of the Media Gateway Server further comprises a stripping unit for stripping a prefix of MSISDN numbers.

The subject-matter of the invention will be best understood from the following description of specific embodiments when being read in conjunction with the accompanying drawings.
- Figure 1: shows a schematic of a packet-switched network connected and a circuit- switched telephone network.
- Figure 2: shows a flowchart of the method for providing originating GSM telephony service to a client of a circuit-switched network calling a B-party with an E.164 number.
- Figure 3: shows a schematic of a circuit-switched telephony network connected to a packet-switched network.
- Figure 4: shows a flowchart of the method for providing terminating GSM telephony services for a client of a packet-switched network when being called.

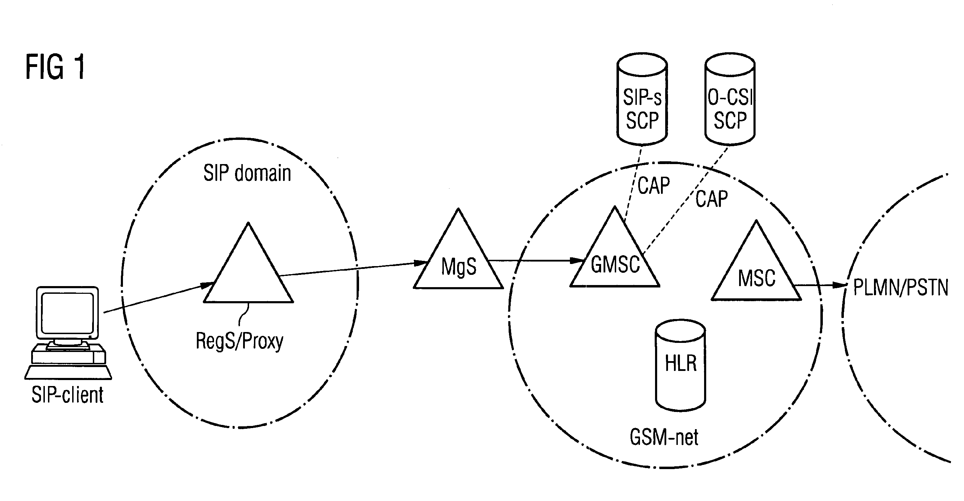

Figure 1 shows a schematic of a packet-switched network connected to a circuit- switched telephone network. It also demonstrates how a call proceeds from a SIP-client to a circuit-switched telephony network. In Figure 1, a packet-switched network with a SIP-client, a SIP domain and an MgS server is shown. A GSM net with a GMSC, a HLR and a MSC is connected to a SIP-S SCP and to an O-CSI SCP and a PLMN/PSTN.

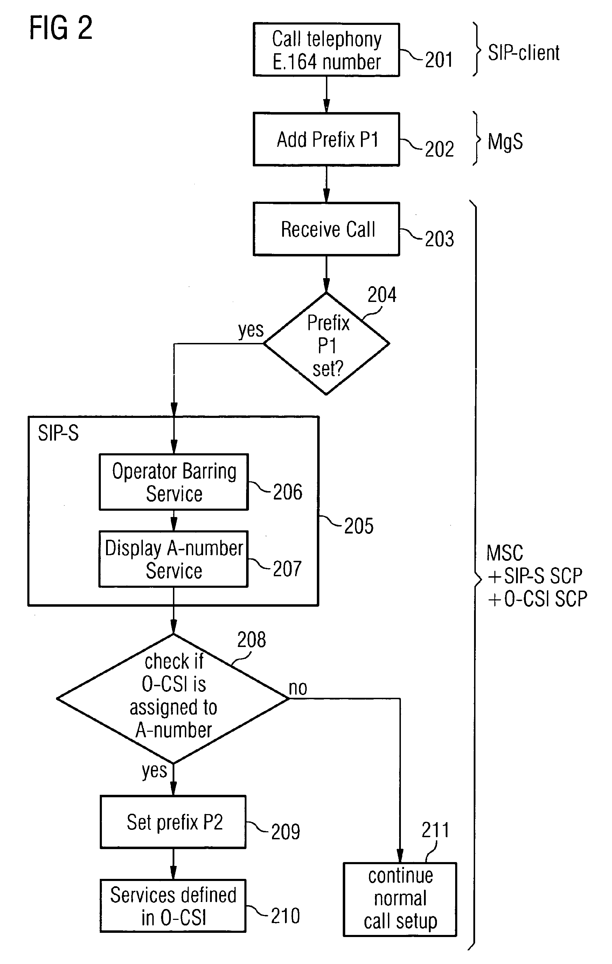

The arrows in Figure 1 indicate the proceeding of the call from the SIP-client. Figure 2 shows the respective flowchart of the method for establishing a connection from a SIP-client to a PSTN-number. The method provides GSM based voice services for SIP-clients in case of a SIP-client initiated call to PSTN-number.

The SIP-client, which is a desktop computer, is connected to a SIP domain, e.g. via a DSL (Digital Subscriber Line) network. The SIP domain comprises a RegS/Proxy server at which the SIP-client registers when connecting to the SIP domain. Usually, as part of the registration procedure, the SIP-client authenticates itself. In step 201, the SIP-client calls an E.164 number, which may be e.g. the MSISDN number of a mobile phone or a number of a phone in public switched telephone network. If there is a call from an SIP-client to an E.164 number, the RegS server directs this call to the MgS server, which is a media gateway server. The call is e.g. a Voice-Over IP (VoIP) call.

In step 202, the media gateway server sets a prefix "P1" for all calls from the SIP domain and forwards this call to a mobile service switching centre, which acts as a transit MSC. In figure 1, the GMSC acts as a transit MSC. The GMSC receives the call from the MgS according to step 203 and checks, in step 204, if the prefix P1 is set.

If the Prefix P1 is set, the IN service "SIP-S" is triggered. This new service is introduced for all calls of the user originating from the SIP-client. The IN-service "SIP-S" is executed as the first GSM service in the MSC after the call having entered the TDM-net in step 203.

The IN service "SIP-S" is provided by a Service Control Point (SCP). SCP's are net elements of an IN telephone network and realise additional services.

The media gateway server puts a prefix P1 to all outgoing calls from SIP-client domain, whereby the prefix is specific for this SIP-client domain. In existing media gateway servers the setting of a prefix is an already implemented function.

In the MSC the IN-service "SIP-S" is triggered based on the prefix "P1". The A-side functions of the IN-service "SIP-S" can be triggered in every MSC that supports a number related net trigger function (CAMEL standard N-CSI-trigger function).

The "SIP-S" service may use an own user data basis or an interface to the HLR of the A-user for the A-side functions.

For all calls from the SIP-client the IN-service "SIP-S" executes, during the establishing phase of the connection, those GSM services that in case of a roaming GSM terminal are executed by the visited mobile service switching centre(VMSC). The execution of the services is done on the basis of the received MSISDN-A number, the telephone number of the SIP-client and at the same time of the mobile phone of the user. These services, being normally provided by the VMSC are especially the operator determined barring services in step 206, by which e.g. international calls can be barred, and the control of the display the A-telephone number of step 207. "A" is always specific the calling party, in this case the SIP-client. "B" indicates the receiving terminal.

In step 208, the IN-service "SIP-S" further determines if an Originating CAMEL Subscription Information (O-CSI) triggered IN-service is to be invoked and determines which service has to be invoked, if any. This O-CSI triggered service may be e.g. a prepaid or a virtual private network. If no O-CSI service is assigned to the A-number, the normal call setup is executed in step 211. Depending on the second IN-service/O-CSI service to be triggered, the "SIP-S" service puts a specific prefix "P2" to the received B-number in step 209 and then terminates.

After terminating the IN-service "SIP-S" the MSC may trigger the IN-service, which is assigned to the A-user via the O-CSI, based on the same trigger mechanism and the prefix "P2". In step 210, the MSC emulates the characteristics of the special O-CSI (like specific service key, SCP-address or use of TDP). The MSC may use a location number being specific for the SIP domain, such that this IN-service may execute unchanged. Finally, the call is routed from the GMSC to the PLMN or the PSTN net.

There is no specific SIP-application server needed for voice services. The SIP-net is only expected to route calls with E.164 numbers from and to the media gateway server, and SIP-net must be able to unambiguously determine a SIP-client on the basis of the MSISDN.

For outgoing calls, the SIP-net must be able to hand over the MSISDN of the calling SIP-client as "calling party number"/A-number to the TDM-net. For incoming calls from the TDM-net, the SIP-net must be enabled to hand over the "calling party number"/A-number to the client.

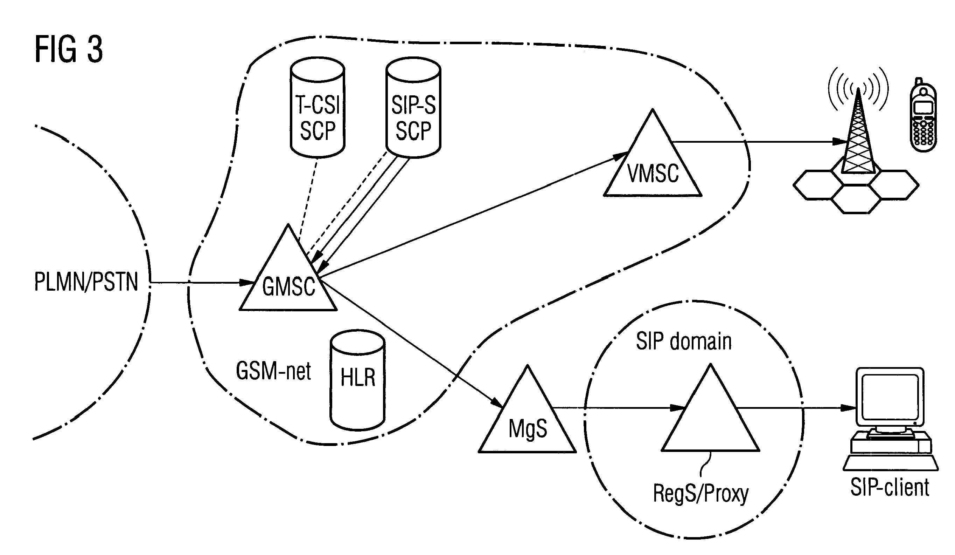

Figure 3 shows a schematic of the networks being used for establishing a call from the TDM-network, e.g. a PSTN or a GSM network, to a SIP-client. In Figure 3, a PLMN/PSTN network and a GSM-net that comprises a GMSC-server and a Home Location Register (HLR) are shown. The GMSC-server is connected to a SCP for the T-CSI services and to a SCP for the SIP-S service. Both SCP's are part of the GSM net, too. The GSM-net further comprises a visited MSC (VMSC), which is connected to a base station that establishes a wireless connection to a mobile phone. The SIP domain comprises a RegS/Proxy server, which is connected to SIP-client. The SIP domain is connected to the GMSC via a mediated gateway server (MgS).

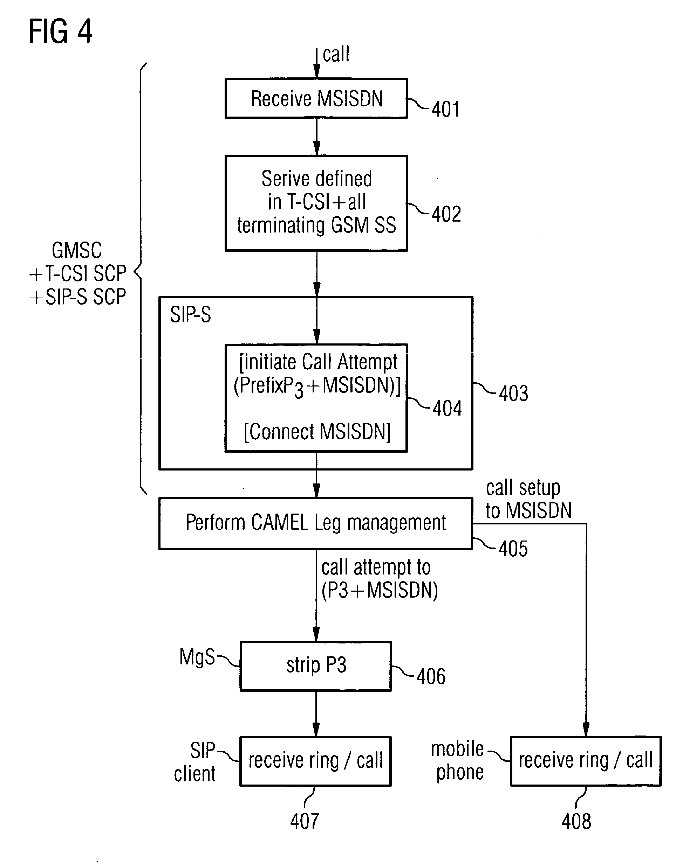

Figure 4 is a flowchart of the method for providing terminating GSM telephony services for a client of a packet-switched network when being called using the networks of Figure 3. For all incoming calls to the user's MSISDN the subscribed GSM-net services and a potential IN-service being provided by the T-CSI are executed first and unmodified. A subscribed GSM-net services may be e.g. an immediate call redirection.

Not until the last GSM-net service has been triggered (e.g. assigning the personal ring back tone), the GMSC triggers the B-side functions of the IN-service "SIP-S". An example for the last GSM-net service is the assigning of the personal ring back tone.

The IN service "SIP-S" has a A-side being called for outgoing calls as described with respect to figures 1 and 2 and a B-side which is described in conjunction to the figures 3 and 4.

The GMSC receives a call from the PLMN or the PSTN in step 401. The GMSC executes the service being subscribed in T-CSI and, in step 402, all termination GSM services according to the subscribed standard procedures. All terminating GSM SS (Supplementary Service) services are executed, too.

The IN-service "SIP-S" is only triggered in step 403 if the B-user has subscribed the SIP-client in the circuit-switched wireless telephony network. Therefore, the GMSC would need a second subscribed B-side IN-trigger of T-CSI. This is currently not supported by the CAMEL standard. Accordingly, a supplier specific trigger method must be used.

A standardized method for national GSM supplemental services (natSS) can be used for this purpose. To mark a B-user having a SIP-client the HLR uses a SS-code from the block that is reserved for the national supplemental services natSS. This is a method being standardized in the MAP (Mobile Application Part) signalling SRI-response. Each GMSC in the Home PLMN (HPLMN) of the B-user must know all natSS values and must be able to evaluate them. With the new natSS value being specified for the "SIP-S" service the GMSC triggers the new IN-service "SIP-S" according to step 403. Such supplier-specific trigger function is already available e.g. in the Siemens MSC. To avoid the current CAMEL restriction - only one terminating IN trigger/T-CSI is allowed in the SRI-response from the HLR - other supplier-specific methods are possible.

For incoming calls to the user with SIP-client the B-side functions of the IN-service "SIP-S" provide the establishing of a second connection to the SIP-client in the SIP-net in parallel to the establishing of a connection to the GSM terminal. For this purpose the IN-service "SIP-S" controls the GMSC with the help of specific standardized IN-operations. One of these operations is the "InitiateCallAttempt" (see the 3GPP TS 23.078 and TS 29.078, CAMEL phase 4). With the help of the routing prefixes "P3" that the IN-service "SIP-S" puts at the beginning of the MSISDN-B (in step 404) the establishing of the connection is done in step 404. The media gateway server routes to the SIP-client in the SIP-client domain. This is done in parallel to the establishing of the connection to the GSM terminal by the help of the MSRN. The procedure "Merge" is used when the SIP-client picks up.

The establishing of the two call attempts is executed by performing the CAMEL leg management which setups a call via the MSISDN or MSRN to the mobile client and executes a call attempt to the SIP-client by the P3-MSISDN number.

The media gateway server (MgS) strips the routing prefix "P3" in step 406. This stripping function is already present in existing media gateway servers.

Both terminals, the SIP- client and the mobile phone, start to ring according to step 407. The IN-service SIP-S monitors both connection attempts and ensures that the call is delivered to the terminal that replies first. The other parallel establishing of the connection is terminated. After the call has been delivered the IN-service "SIP-S" terminates.

If the B-user is charged, e.g. if he uses a prepaid service and is currently in a foreign network, the charging is triggered as if the connection would be established to the GSM terminal of the B-user. This is because the triggering of the charging is done before the triggering of the B-side functions of the IN-service "SIP-S".

But if the incoming call is forwarded to the SIP-client the charging would need to be adapted in the GMSC and potentially also in an IN-service e.g. prepaid services being triggered by the T-CSI. This is not yet fully supported in the CAMEL phase 4 standards for the IN-functions of mobile networks. In the ETSI/ITU standards for the IN-function of the wireline networks such charging operations are already specified.

The special case, that the connection to the SIP-client is always free of charge, can be supported by the GMSC already by the standardized CAMEL functions in the GMSC. The GMSC can determine that the connection to the SIP-client is free of charge according to the prefix "P3" without support by the IN-service "SIP-S". The GMSC may forward a "no-charge-indicator" to a GSM charging function being activated for the user and/or to a T-CSI triggered IN-service being activated for a user with charging function via a CAMEL signalling e.g. by the operation "EventReportBCSM" for the event = T-answer.

### Abbreviations employed:

CAP CAMEL Application Part
MSC mobile service switching centre
GMSC Gateway Mobile Switching Centre
PSTN Public switched telephone network
PLMN Public land mobile network
OCSI Originating CAMEL Subscription Information
IN Intelligent Network
IP Internet Protocol
SCP Service Control Point
SIP Session Initiation Protocol
MgS Media Gateway Server
GSM Global System for Mobile Communications
UMTS Universal Mobile Telecommunications System
UTRAN UMTS radio access network
VMSC Visited Mobile Service Switching Centre
MSRN Mobile Station Roaming Number
MSISDN Mobile Subscriber ISDN Number

## Claims

1. Method for providing originating telephony services to a secondary client (SIP-client) of a packet-switched network (SIP network), the secondary client (SIP-client) of the packet-switched network being identified by the same MSISDN number as a first, mobile client being subscribed to a circuit-switched wireless telephony network,
the method comprising:
- receiving, by a mobile service switching centre (MSC), a call attempt from the secondary client via the packet-switched network,
- triggering an IN-service "SIP-S" which executes the originating services subscribed by the mobile client at the circuit-switched wireless telephony network and which checks if the call if Originating CAMEL Subscription Information (O-CSI) services are subscribed by the mobile client and which marks the call accordingly.

2. Method according to claim 1,
in which the mobile switching centre detects by a first prefix (P1) added to the dialled number of the call if the calling party is a client of the packet-switched network.

3. Method according to claim 1,
in which the call is marked by the IN service "SIP-S" via a second prefix (P2) if O-CSI services are subscribed by the calling party.

4. Method according to claim 3,
in which the O-CSI services are triggered by the mobile switching centre (MSC) if the call is marked by a second prefix (P2).

5. Method according to one of the claims 1 to 4,
in which the circuit-switched wireless telephony network is a GSM (Global System for Mobile Communications) or a UMTS (Universal Mobile Telecommunications System) network.

6. Method according to one of the claims 1 to 5,
further comprising the steps
- transferring the call attempt from the packet-switched network to a media gateway server (MgS) if the secondary client calls a E.164 number,
- adding, by the media gateway server, the first prefix (P1) to the dialled number of the call.

7. Method according to one of the claims 1 to 6,
in which the IN-service "SIP-S" get the information about the services being subscribed by the mobile client from the Home Location Register (HRL) of the circuit-switched wireless telephony network.

8. Method for providing terminating telephony services of a circuit-switched wireless telephony network to a secondary client (SIP-client) of a packet-switched network (SIP network), the secondary client (SIP-client) of the packet-switched network being identified by the same MSISDN number as a first, mobile client being subscribed to the circuit-switched wireless telephony network, comprising the following steps, being executed by the Gateway Mobile Service Switching Centre (GMSC):
- receiving a call attempt from the circuit-switched wireless telephony network to the MSISDN number of the secondary client and the first, mobile client,
- executing the services subscribed by the first, mobile client,
- continuing connecting setup to the first, mobile client,
- executing an IN service "SIP-S" which initiates a connection to the secondary client.

9. Method according to claim 8,
in which the IN service "SIP-S" initiates the connection to the secondary client by adding a third prefix (P3) to the called MSISDN number.

10. Method according to claim 9,
in which the connection is established to the client which picks up first and the initialisation of the connection to the other client is cancelled.

11. Method according to claim 10,
in which the Gateway Mobile Switching Centre (GMSC) sends a "no-charge-indicator" to the charging server if the secondary client picked up first.

12. Method according to one of the claims 10 to 11,
in which the subscription of the IN service "SIP-S" is stored in the national Supplemental GSM Subscription (natSS).

13. Mobile service switching centre (MSC), comprising:
- a receiving unit for receiving a call attempt from a secondary client (SIP-client) being subscribed to a packet-switched network, the secondary client (SIP-client) of the packet-switched network being identified by the same MSISDN number as a first, mobile client being subscribed to a circuit-switched wireless telephony network,
- a first trigger unit which triggers a IN-service "SIP-S" which executes the originating services subscribed by the mobile client in the circuit-switched wireless telephony network and which checks if O-CSI (Originating CAMEL Subscription Information) services are subscribed by the calling party and marks the dialled number of the call attempt,
- a second trigger unit that recognizes from the marked dialled number of the call attempt if O-CSI services are subscribed.

14. Mobile service switching centre according to claim 13, in which the receiver unit detects by a first prefix (P1) added to the dialled number if the call attempt is initiated by a client of the packet-switched network.

15. Mobile service switching centre, according to one of the claims 13 or 14,
in which the second trigger unit recognizes via a second prefix (P2) of the dialled number if O-CSI services are subscribed and triggers O-CSI based services of the calling party.

16. Mobile service switching centre (MSC), comprising
- a receiver for receiving a call attempt from the circuit-switched wireless telephony network, the MSISDN number of the call attempt identifying a secondary client (SIP-client) of the packet-switched network (SIP-net) and a first, mobile client of a circuit-switched wireless telephony network,
- a executing unit that executes the telephony services subscribed by the mobile client,
- a trigger unit triggering a IN service "SIP-S" which initiates a connection to the secondary client
- a connection unit which establishes a connection to the mobile client and in parallel a connection to the secondary client under the control of the IN service "SIP-S".

17. Mobile service switching centre according to claim 16, in which the call is routed to the secondary client by the help of a third prefix (P3) being added to the MSISDN number of the call.

18. Mobile service switching centre according to claim 17, in which the connection unit and the execution unit
- establish the connection to the client which picks up first
- and terminate the connection to the other client under the control of the IN service based on standardized CAMEL leg management procedures.

19. Mobile service Switching Centre according to one of the claims 13 to 18,
- which executes a method according to claims 1 to 7 in case of a call from a secondary client (SIP-client) being subscribed to a the packet-switched network, the secondary client (SIP-client) of the packet-switched network being identified by the same MSISDN number as a first, mobile client being subscribed to the circuit-switched wireless telephony network,
- and which executes a method according to one of the claims of 8 to 12 in case of a call from the circuit-switched wireless telephony network to a MSISDN number identifying a secondary client (SIP-client) of the packet-switched network (SIP-net) and a first, mobile client of a circuit-switched wireless telephony network.

20. Communication system, comprising
- a mobile service switching centre according to one of the claims 13 to 19,
- and a Media Gateway Server as a connection between the mobile switching centre and a packet-switched network, the Media Gateway Server
- having a first means
- for adding a first prefix (P1) to the dialled number of the call from the secondary client
- and for routing the call to the mobile switching centre,
- and having a second means for routing a call from the mobile switching centre to the packet-switched network.

21. Communication system according to claim 20,
in which the second means further comprises a stripping unit for stripping a prefix of MSISDN numbers.
